# EUROPÄISCHE PATENTSCHRIFT

(11) **EP 0 517 705 B1**
(45) Veröffentlichungstag und Bekanntmachung des Hinweises auf die Patenterteilung: **06.07.1994**
(21) Anmeldenummer: 91902124.6
(22) Anmeldetag: 17.12.1990
(51) Int. Cl.: F16H 3/12, B60K 41/10

(54) **VERFAHREN ZUM SCHALTEN EINES STUFENWECHSELGETRIEBES**
PROCESS FOR CHANGING A STEP-BY-STEP VARIABLE GEAR
PROCEDE DE CHANGEMENT DE VITESSE DANS UNE TRANSMISSION A VARIATION DISCONTINUE DE LA VITESSE

(30) Priorität: 01.03.1990 DE 4006357
(43) Veröffentlichungstag der Anmeldung: 16.12.1992
(73) Patentinhaber: Volkswagen Aktiengesellschaft, 38436 Wolfsburg (DE)
(72) Erfinder: SCHNEIDER, Arthur, D-3300 Braunschweig (DE); KLARHOEFER, Christian, D-3180 Wolfsburg (DE)
(86) Internationale Anmeldenummer: EP9002217
(87) Internationale Veröffentlichungsnummer: WO9113271

(56) Entgegenhaltungen:
- EP-A- 0 088 486
- EP-A- 0 173 117
- EP-A- 0 300 792
- EP-A- 0 367 020
- US-A- 4 860 607

## Beschreibung

Die Erfindung betrifft ein Verfahren zum Schalten eines Stufenwechselgetriebes gemäß dem Oberbegriff des Patentanspruchs 1. Bei allgemein bekannten, herkömmlichen Stufenwechselgetrieben mit einer Getriebeeingangswelle und einer Getriebeausgangswelle, die achsparallel zu der Getriebeeingangswelle angeordnet und über Zahnradpaare mit dieser verbindbar ist, muß der vom Antriebsmotor über das Getriebe zu den Fahrzeugrädern reichende Momentenfluß unterbrochen werden, wenn in einen neuen Gang geschaltet werden soll. Die Dauer einer solchen Zugkraftunterbrechung wird bestimmt durch die für die Synchronisation der formschlüssig miteinander zu verbindenden Getriebeglieder benötigte Zeitspanne.

Aus der EP-B-0173117 ist ein Verfahren zum Schalten eines Stufenwechselgetriebes bekannt, bei dem während eines Hochschaltvorganges für die Dauer der in den jeweiligen Gängen erfolgenden Zugkraftunterbrechung eine Übertragung des Antriebsmomentes des Motors über eine zuschaltbare Getriebestufe auf die Fahrzeugräder vorgesehen ist. Dabei erfolgt die Zuschaltung zeitgleich mit der Zugkraftunterbrechung, so daß während eines Hochschaltvorgangs das Antriebsmoment des Motors jeweils zeitlich nacheinander zunächst von der Getriebestufe des niedrigen Ganges auf die zuschaltbare Getriebestufe und dann auf den höheren Getriebegang zur Erzeugung einer Vortriebskraft übertragen wird.

Ein demgegenüber verbessertes Verfahren zeigt die EP-A-0300792. Dort wird ein Verfahren zur Schaltung eines Stufenwechselgetriebes gezeigt, bei dem die zuschaltbare Getriebestufe zur Einleitung des Schaltvorgangs bereits dann zugeschaltet wird, wenn der jeweils eingelegte Getriebegang noch nicht ausgerückt ist. Die zuschaltbare Getriebestufe übernimmt zumindest einen Teil der Drehmomentübertragung, um so die eingelegte Getriebestufe zu entlasten. Ein derartiges Verfahren beschreibt auch die nicht vorveröffentlichte EP-A-0367020.

Bei solchen Getrieben wird die zuschaltbare Getriebestufe zur Einleitung eines Hochschaltvorgangs schon dann aktiviert, wenn der alte Getriebegang noch eingelegt ist. Es tritt im Stufenwechselgetriebe zunächst eine Verzweigung des Antriebsmomentes auf, das heißt, daß ein Teil noch über den alten Getriebegang übertragen wird, während der andere Teil schon über die zuschaltbare Getriebestufe dem Abtrieb zugeführt wird. Wenn schließlich der eingelegte Getriebegang - beispielsweise nach Unterschreitung eines vorgegebenen Drehmomentenbetrages im Antriebszweig dieses Getriebeganges - ausgerückt wird, überträgt nur noch die zuschaltbare Getriebestufe das Antriebsmoment. Durch eine solche Verzweigung des Antriebsmomentes weist das für den Vortrieb des Fahrzeuges zur Verfügung stehende Moment einen besonders günstigen Verlauf auf. Insgesamt wird dadurch erreicht, daß auch während des Gangstufenwechsels am Getriebeausgang ein passendes Antriebsmoment zur Verfügung steht. Dies geschieht bei einem Hochschaltvorgang beispielsweise durch die Vorgabe eines negativen Gradienten der Drehzahl (siehe US-A-4 860 607).

In ähnlicher Weise wird auch der Zurückschaltvorgang durchgeführt. Im Unterschied zum Hochschaltvorgang erfolgt hier eine positive Drehzahländerung pro Zeit, da die Getriebeeingangswelle bei gleicher Fahrgeschwindigkeit im kleineren Gang schneller dreht als im höheren Gang. Entsprechend ist als Vorgabewert für die Drehzahländerung ein positiver Gradient anzugeben.

Aus der US-A-4 860 607 ist ein Stufenwechselgetriebe bekannt, welches in seinem prinzipiellen Aufbau mit den in der EP-B-0173117 und EP-A-036702 beschriebenen Stufenwechselgetrieben vergleichbar ist. Dort ist ersichtlich, daß bei einem Gangwechsel die Änderung der Drehzahl pro Zeit mit einem konstanten Gradienten vorgenommen wird.

Vor diesem Hintergrund liegt der Erfindung die Aufgabe zugrunde, das eingangs beschriebene Verfahren so weiterzubilden, daß das für den Vortrieb des Fahrzeugs zur Verfügung stehende Moment einem besonders günstigen Verlauf aufweist.

Die Aufgabe wird gelöst durch das kennzeichnende Merkmal des Patentanspruchs 1. Die Unteransprüche enthalten zweckmäßige Ausgestaltungen sowie vorteilhafte Weiterbildungen der Erfindung.

Erfindungsgemäß wird über die zusätzliche Getriebestufe die Änderung und/oder Anpassung der Drehzahl n_{EIN} der Getriebeeingangswelle durch Vorgabe einer bestimmten Drehzahländerung pro Zeit (Sollwert eines Gradienten der Drehzahl) bewirkt, wobei der Betrag der Drehzahländerung pro Zeit in Abhängigkeit von zumindest einer dem Betriebszustand des Antriebsmotors charakterisierenden Größe vorbestimmbar ist.

Eine dieser charakterisierenden Größen kann beispielsweise die Drehzahl n_{EIN} selbst sein. Dies geschieht zweckmäßigerweise durch eine Rückführung und Regelung des Gradienten zur Änderung bzw. Anpassung der Drehzahl n_{EIN}.

Der Sollwert des Gradienten kann aber auch vom Moment M_{EIN} abhängen, welches definitionsgemäß das vor Beginn des Schaltvorganges durch die Getriebeeingangswelle geleitete Moment sein soll. Dieses Moment M_{EIN} hängt ab vom Motormoment M_{MOT} und von den trägen Massen aller der Getriebeeingangswelle vorgeordneten und mit dieser verbundenen rotierenden Teile. Durch die Abhängigkeit der Vorgabe des Gradienten von zumindest einem der genannten Momente ist sichergestellt, daß das über die zusätzliche Getriebestufe geleitete Moment zwischen dem vor Beginn des Schaltvorganges und dem nach Beendigung des Schaltvorganges übertragene Moment liegt.

In vorteilhafter Weise kann der Sollwert des Gradienten auch in Abhängigkeit von der alten und/oder neuen Gangstufe bestimmt werden. Auf diese Weise wird sichergestellt, daß das über die zusätzliche Getriebestufe geleitete Moment bestimmte Grenzwerte nicht über- oder unterschreitet.

In einer besonders vorteilhaften Ausführungsform der Erfindung wird der Sollwert des Gradienten vor Erreichen der Synchrondrehzahl durch die Drehzahl n_{EIN} dem Betrage nach verringert. Das Erreichen der Synchrondrehzahl bedeutet, daß die Drehzahlen der Getriebeeingangs- und der Getriebeausgangswelle entsprechend dem übersetzungsverhältnis der einzulegenden Getriebestufe vorliegen. Innerhalb des Schaltvorganges wird beim Erreichen der Synchrondrehzahl die neue Getriebestufe eingelegt. Letzteres erfordert eine Zeitspanne von bestimmter Länge (> 0). Innerhalb dieser Zeitspanne sollte die Drehzahl n_{EIN} möglichst nahe der Synchrondrehzahl sein. Zu diesem Zweck wird nun - wie oben angeführt - der Gradient vor Erreichen der Synchrondrehzahl verringert. Die für das Einlegen der neuen Getriebestufe zur Verfügung stehende Zeit wird auf diese Weise verlängert.

Die Ansprüche 6, 7 und 8 zeigen verschiedene Möglichkeiten zur Bestimmung des Zeitpunktes der Änderung des Gradienten. Dabei ist zu beachten, daß auch eine stetige oder in mehreren Schritten ablaufende Änderung des Gradienten möglich ist.

Weitere Patentansprüche betreffen unter anderem die Regelung bzw. Steuerung der Momentenübertragung über die zusätzliche Getriebestufe sowie Maßnahmen zur Anpassung der Drehzahl n_{EIN} an die Synchrondrehzahl.

Anspruch 14 betrifft schließlich ein Stufenwechselgetriebe zur Durchführung des erfindungsgemäßen Verfahrens. Dabei sind Mittel zur Steuerung bzw. Regelung der Drehzahländerung der Getriebeeingangswelle vorgesehen.

Gemäß Anspruch 15 ist die zuschaltbare Getriebestufe im Stufenwechselgetriebe stufenlos oder schrittweise verstellbar. Auf diese Weise kann die zusätzliche Getriebestufe jeweils auf das Übersetzungsverhältnis des einzulegenden Ganges eingestellt werden. Wärme- bzw. Reibungsverluste beim Zuschalten der zusätzlichen Getriebestufe werden so auf ein Minimum reduziert.

Vorteilhafte Ausführungsformen der Erfindung werden im folgenden anhand von Zeichnungen näher erläutert. Es zeigen:
- Figur 1:: den schematischen Aufbau eines Stufenwechselgetriebes zur Durchführung des erfindungsgemäßen Verfahrens;
- Figur 2:: den Verlauf des Momentes an der Getriebeausgangswelle beim Hochschalten vom ersten in den zweiten Gang;
- Figur 3:: den Momentenverlauf an einer Kupplung, mittels derer ein Teil des Antriebsmoments über die zusätzliche Getriebestufe geleitet wird, ebenfalls beim Hochschalten;
- Figur 4:: den Verlauf der Drehzahl des Motors und den Verlauf einer Differenzdrehzahl, die ein Maß ist für die Abweichung der Drehzahl der Getriebeeingangswelle von der Synchrondrehzahl, ebenfalls beim Hochschalten;
- Figuren 5 bis 7 :: Momenten- und Drehzahlverläufe entsprechend den Figuren 2 bis 4, jedoch beim Zurückschalten;
- Figur 8:: eine andere Variante des Stufenwechselgetriebes zur Darstellung einer weiteren Ausführungsform des erfindungsgemäßen Verfahrens.

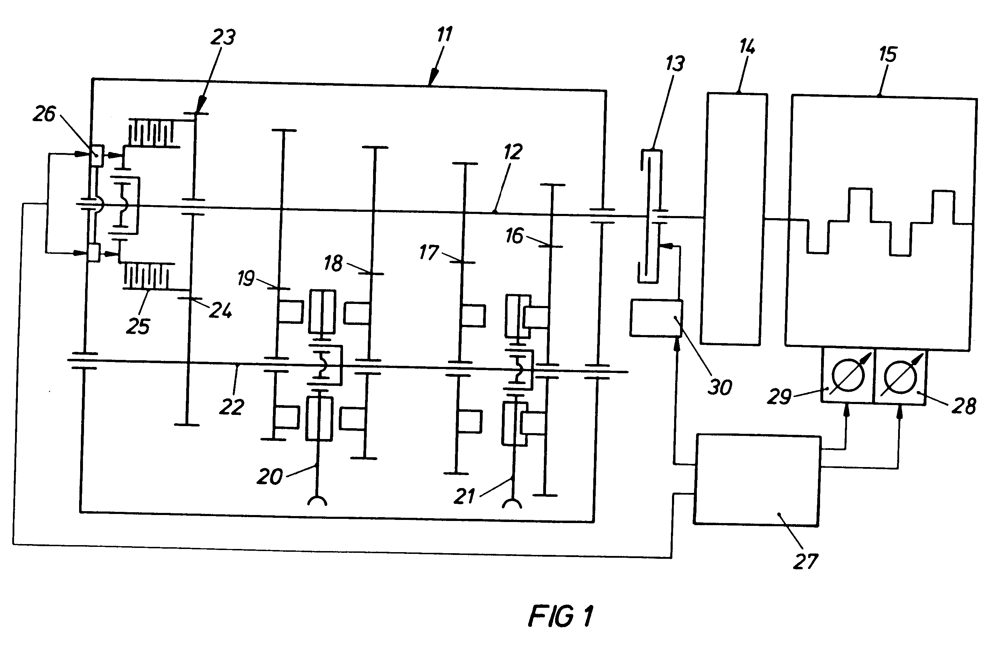

In Figur 1 ist schematisch ein Stufenwechselgetriebe 11 dargestellt, dessen Getriebeeingangswelle 12 über eine Anfahr- und Trennkupplung 13 mit einem eine Schwungmasse 14 aufweisenden Antriebsmotor 15 verbunden ist. Die Getriebeeingangswelle 12 ist über den einzelnen Getriebegängen zugeordneten Paaren von Gangzahnrädern 16 bis 19 sowie über Schiebemuffen 20, 21 mit der mit den angetriebenen Fahrzeugrädern in Verbindung stehenden Getriebeausgangswelle 22 verbindbar. Mit 23 ist hier eine zwischen der Getriebeeingangswelle 12 und der Getriebeausgangswelle 22 wirksame zuschaltbare Getriebestufe bezeichnet, die im wesentlichen aus einem dem höchsten Getriebegang zugeordneten Zahnradpaar 24 und einer Kupplung besteht. Die gezeigte Lamellenkupplung 25 ist prinzipiell auch durch Konuskupplungen, Magnetkupplungen sowie hydrodynamische oder hydrostatische Kupplungen ersetzbar. Das von der Lamellenkupplung 25 übertragbare Drehmoment ist hier auf einen vorgebbaren Höchstwert einstellbar. Durch die von einer ersten Betätigungseinrichtung 26 beaufschlagbare Lamellenkupplung 25 ist das Losrad des Zahnradpaares 24 mit der Getriebeeingangswelle 12 auch dann verbindbar, wenn - wie in der Zeichnung beispielhaft am ersten Getriebegang (Zahnradpaar 16) dargestellt - innerhalb des Stufenwechselgetriebes 11 bereits eine formschlüssige Verbindung besteht. Grundsätzlich ist es auch möglich, nicht den vorhandenen höchsten Getriebegang 24 als zuschaltbare Getriebestufe auszunutzen, sondern dafür ein zusätzliches Zahnradpaar vorzusehen. Erfindungsgemäß weist das in der Zeichnung dargestellte Ausführungsbeispiel für ein Stufenwechselgetriebe 11 noch eine Steuereinrichtung 27 auf, durch die neben der ersten Betätigungseinrichtung 26 auch eine dem Antriebsmotor 15 zugeordnete Momentenbeeinflussungsvorrichtung 28 und eine Drehzahlbeeinflussungseinrichtung 29 sowie eine der Anfahr- und Trennkupplung 13 zugeordnete zweite Betätigungseinrichtung 30 beaufschlagbar sind. Die Funktionsweise des vorstehend beschriebenen Stufenwechselgetriebes 11 wird nun anhand von Diagrammen eingehender erläutert.

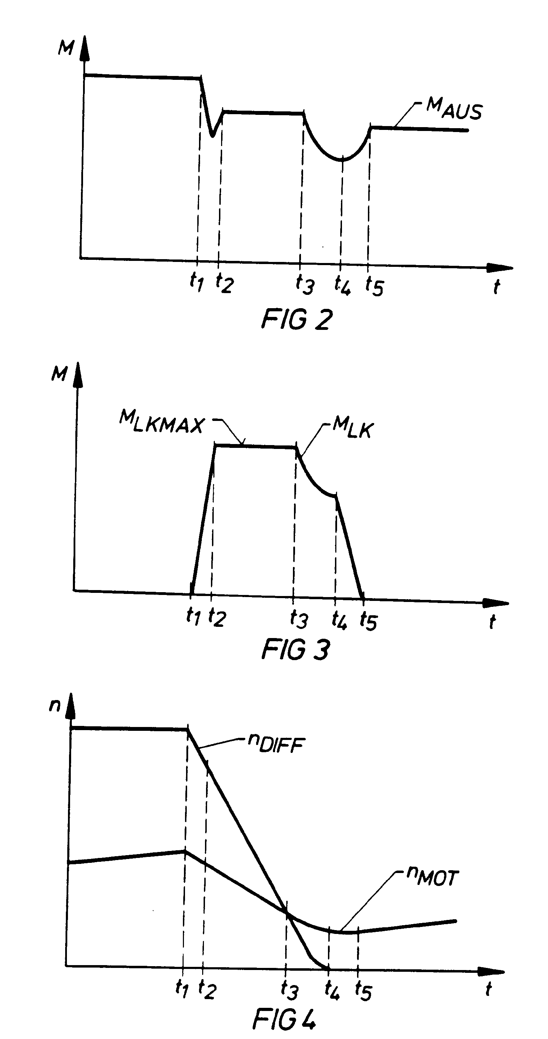

Die Figuren 2 bis 4 zeigen den Verlauf der Momente bzw. Drehzahlen während eines Hochschaltvorganges, zum Beispiel vom ersten in den zweiten Gang. Die Angaben der Zeitpunkte t1 - t5 stimmen innerhalb der Figuren 2 - 4 überein. Der Hochschaltvorgang beginnt zum Zeitpunkt t1. Durch Betätigung der Lamellenkupplung 25 mittels der ersten Betätigungseinrichtung 26 wird die zusätzliche Getriebestufe 23 zugeschaltet. Letztere weist ein größeres übersetzungsverhältnis auf, als die gerade eingelegte Getriebestufe (Gangzahnradpaar 16) des ersten Ganges. Es kann demzufolge in dieser Phase des Schaltvorganges zu keiner reibschlüssigen Verbindung über die Lamellenkupplung 25 kommen. Bedingt durch das höhere übersetzungsverhältnis der zusätlichen Getriebestufe 23 gegenüber dem eingelegten ersten Gang erfolgt zumindest durch Betätigung der Lamellenkupplung 25 eine übertragung eines Momentes vom Motor 15 auf die Getriebeausgangswelle 22. Der Betrag des übertragenen Moments läßt sich durch Änderung des Anpreßdruckes innerhalb der Lamellenkupplung 25 steuern. Die Lamellenkupplung 25 wird nun derart beaufschlagt, daß das an dieser Stelle übertragene Moment M_{LK} etwa so groß wird wie das bisher durch die eingelegte Getriebestufe übertragene Moment. Dieses maximale durch die Lamellenkupplung 25 übertragene Moment M_{LK} _{MAX} ist zum Zeitpunkt t2 erreicht und wird sodann durch entsprechende Steuerung der ersten Betätigungseinrichtung 26 beibehalten. Bei Änderung der Fahrpedalstellung durch den Fahrer erfolgt gegebenenfalls eine Anpassung der Beaufschlagung der Lamellenkupplung 25. Nach Erreichen des maximalen Momentes M_{LK} _{MAX} wird der eingelegte erste Gang durch Betätigen der Schiebemuffe 21 herausgenommen.

Die Zuschaltung der zusätzlichen Getriebestufe 23 bewirkt zugleich eine Absenkung der Motordrehzahl n_{MOT}. Diese wird nach dem Herausnehmen des ersten Ganges noch so weit abgesenkt, bis an der Getriebeeingangswelle 12 die Synchrondrehzahl zum Einlegen des zweiten Ganges (Gangzahnradpaar 17) erreicht ist. In der Figur 4 ist als Abweichung der Drehzahl der Getriebeeingangswelle n_{EIN} von der Synchrondrehzahl die Drehzahldifferenz n_{DIFF} eingezeichnet. Zum Zeitpunkt t4 ist n_{DIFF} = 0 und damit die Synchrondrehzahl erreicht.

In der Figur 4 ist erkennbar, daß die Motordrehzahl n_{MOT} zwischen dem Beginn des Schaltvorgangs (Zeitpunkt t1) und dem Erreichen der Synchrondrehzahl (Zeitpunkt t4) stetig abnimmt mit einer Verringerung der Drehzahländerung im Bereich bzw. kurz vor der Synchrondrehzahl. Die Änderung der Motordrehzahl n_{MOT} wird im folgenden als Gradient bezeichnet. Ziel ist es nun, das an der Getriebeausgangswelle 22 anliegende Moment möglichst nicht zu unterbrechen. Zugleich soll der eigentliche Schaltvorgang, das heißt das Einund Ausrücken der Schiebemuffen 20, 21 möglichst momentenfrei erfolgen. Dazu wird, wie zuvor beschrieben, zumindest ein Teil des Moments über die zusätzliche Getriebestufe 23 geführt. Die beschriebene Absenkung der Motordrehzahl n_{MOT} ergibt sich zwangsläufig aus dem an der Lamellenkupplung 25 übertragenen Moment M_{LK}. Letzteres soll im Verlauf des Schaltvorganges möglichst konstant sein, ist jedoch selbst nur schwer meßbar. Als Maß für das Moment M_{LK} wird nun die Änderung der Motordrehzahl n_{MOT}, nämlich der Gradient herangezogen. In dem vorliegenden Ausführungsbeispiel ist die Drehzahl n_{MOT} zugleich die Drehzahl der Getriebeeingangswelle n_{EIN}. Zur Steuerung des an der Lamellenkupplung 25 übertragenen Moments M_{LK} wird nun ein bestimmter Gradient vorgegeben und zum Erreichen desselben die erste Betätigungseinrichtung 26 durch die Steuereinrichtung 27 entsprechend angesteuert. Vorzugsweise wird die tatsächliche Drehzahl n_{MOT} in Intervallen gemessen, der augenblickliche Gradient berechnet und die Abweichung des Gradienten von einem vorgegebenen Sollwert zur Regelung der ersten Betätigungseinrichtung 26 herangezogen. Es liegt somit ein geschlossener Regelkreis vor. Den Figuren 3 und 4 ist zu entnehmen, daß zwischen den Zeitpunkten t2 und t3 ein konstantes Kupplungsmoment M_{LK} und ein konstanter Gradient der Drehzahl n_{MOT} vorliegen. Die Drehzahl n_{MOT} wird so weit abgesenkt, bis ein Gleichlauf des Losrades des Gangzahnradpaares 17 des zweiten Ganges mit der Getriebeausgangswelle 22 erreicht ist und die Schiebemuffe 21 betätigt werden kann. Letztgenannter Vorgang benötigt eine gewisse endliche Zeitspanne. Aus diesem Grunde soll die Drehzahl an der Getriebeeingangswelle n_{EIN} bzw. die Motordrehzahl n_{MOT} den Synchronpunkt möglichst langsam passieren. Idealerweise soll die Drehzahldifferenz n_{DIFF} (= n_{EIN} -Synchrondrehzahl) nicht negativ werden. Um dies zu erreichen, wird ab dem Zeitpunkt t3, das heißt noch vor dem Erreichen der Synchrondrehzahl, ein dem Betrage nach geringerer Gradient vorgegeben. Entsprechend wird der Anpreßdruck in der Lamellenkupplung 25 und damit auch das übertragene Moment M_{LK} herabgesetzt.

Für den Zeitpunkt der Änderung des Gradienten sind verschiedene Möglichkeiten vorgesehen. In einer Ausführungsform wird der Gradient nach einer bestimmten Zeit, gemessen ab Beginn des Schaltvorganges (t1) verringert. In einer anderen Ausführungsform erfolgt eine Verringerung des Gradienten, nachdem die tatsächliche Drehzahl n_{EIN-IST} bzw. die tatsächliche Drehzahl n_{MOT-IST} sich der Synchrondrehzahl bis auf einen bestimmten Betrag genähert hat. Der Gradient ändert sich demnach in Abhängigkeit vom Abstand der tatsächlichen Drehzahl zur Synchrondrehzahl. In einer weiteren Ausführungsform ändert sich der Gradient in Abhängigkeit vom Abstand der tatsächlichen Drehzahl n_{EIN-IST} von der Drehzahl n_{EIN} zu Beginn des Schaltvorganges (n_{EIN-START}).

Bei einer beträchtlichen Änderung des vorgegebenen Gradienten kommt es zu starken Änderungen des Kupplungsmomentes M_{LK}. Um diese Momentensprünge zu begrenzen, ist es vorteilhaft, den Gradienten mehrmals und in kleinen Schritten oder gar kontinuierlich zu verringern. Ein entsprechend weicher Momentenverlauf ist der Figur 3 entnehmbar.

Figur 2 zeigt den Verlauf des Momentes m_{AUS} an der Getriebeausgangswelle 22 während des Schaltvorganges. Bis zum Zeitpunkt t1 ist das durch die erste Getriebestufe übertragene Moment voll wirksam. Ab dem Zeitpunkt t1 wird die Momentenübertragung über die zusätzliche Getriebestufe 23 aufgebaut. Entsprechend verringert sich das durch die erste Getriebestufe übertragene Moment. Zum Zeitpunkt t2 ist die erste Getriebestufe entlastet und das Moment wird zum größten Teil über die zusätzliche Getriebestufe 23 geführt. Zum Zeitpunkt t3 ergibt sich durch die Änderung des Gradienten auch eine Verringerung des Momentes M_{AUS} an der Getriebeausgangswelle 22. Zum Zeitpunkt t4 ist der Gradient am geringsten und damit auch M_{AUS}. Nach Einlegen des zweiten Ganges wird die Lamellenkupplung 25 wieder gelöst und das Antriebsmoment voll über den zweiten Gang geführt (Zeitpunkt t5).

Das durch die Lamellenkupplung 25 übertragene Moment M_{LK} wird so gewählt, daß sich an der Getriebeausgangswelle 22 ein Moment M_{AUS} einstellt, welches den durch die vor und nach dem Schaltvorgang eingelegten Getriebestufen übertragenen Momenten entspricht. Entsprechend liegt das Moment M_{AUS} zwischen den Zeitpunkten t2 und t3 etwa zwischen dem Moment M_{AUS} bis zum Zeitpunkt t1 und dem Moment M_{AUS} nach dem Zeitpunkt t5. Der Gradient ist somit keine feste Größe, sondern unter anderem abhängig vom Moment M_{MOT} des Antriebsmotors und vom einzulegenden Gang. Das Motormoment M_{MOT} kann beispielsweise mit Hilfe des gemessenen Saugrohrdruckes des Motors festgestellt werden.

Vorzugsweise ist in der Steuereinrichtung 27 ein Kennfeld abgespeichert, welches einer Vielzahl von Kombinationen aus Motormoment M_{MOT} und übersetzungsverhältnis jeweils einen Gradienten-Sollwert zuordnet. Während des Schaltvorganges wird der Gradient überwacht und durch entsprechende Anpassung der Anpreßkraft in der Lamellenkupplung geregelt.

In einer anderen Ausführungsform wird im abgespeicherten Kennfeld auf das übersetzungsverhältnis des alten Ganges abgestellt. Besonders vorteilhaft, aber auch aufwendiger, ist die Verwendung einer Kombination aus beiden übersetzungsverhältnissen. So ist es beispielsweise denkbar, daß im Fahrbetrieb nach starker Last und Beschleunigung die Last zurückgenommen wird und daraufhin in den übernächsten Gang geschaltet werden kann. Gleiches gilt für das Zurückschalten. Das übersetzungsverhältnis des neuen Ganges ergibt sich demgemäß nicht zwangsläufig aus dem übersetzungsverhältnis des alten bzw. des neuen Ganges allein.

Das Moment an der Lamellenkupplung 25 ist darüber hinaus abhängig vom Trägheitsmoment an der Getriebeeingangswelle 12. Dies hängt im wesentlichen ab von den rotierenden Massen im Antriebsmotor 15, der Schwungmasse 14 und der Trennkupplung 13. Die im Kennfeld abgespeicherten Momente sind entsprechend angepaßt.

Weiterhin ist es möglich, zumindest bei kleinen Drehzahlen, den Gradienten in Abhängigkeit von der Motordrehzahl auszuwählen. Anderenfalls könnte bei einem zu großen Gradienten im Verlauf des Schaltvorganges eine unerwünscht niedrige Motordrehzahl erzielt werden. Eine andere Möglichkeit besteht für diesen Fall in einem Verzicht auf Einleitung des Schaltvorganges.

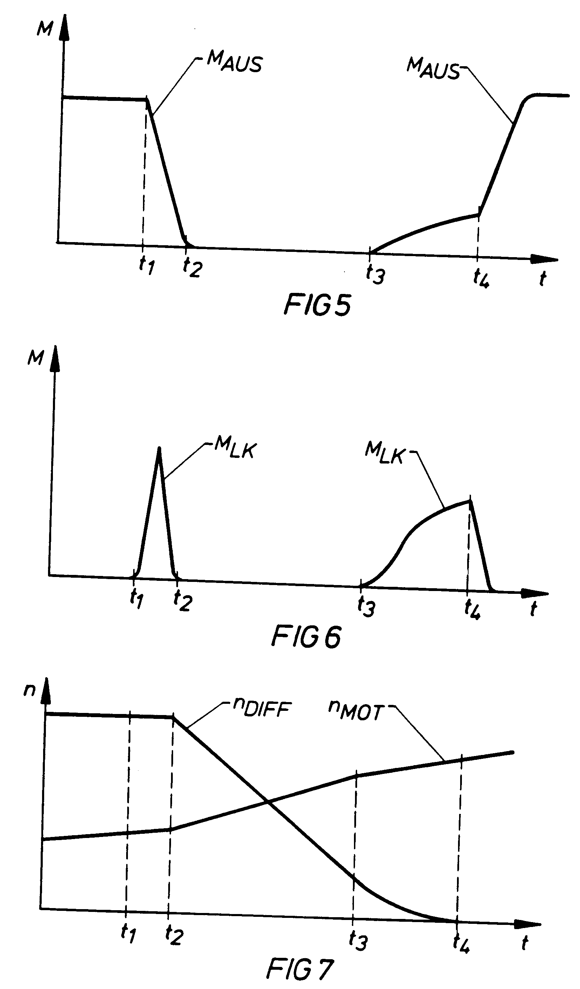

Die Figuren 5 bis 7 zeigen den Momenten- und Drehzahlverlauf für einen Zurückschaltvorgang. Dieser verläuft folgendermaßen (die Angaben der Zeitpunkte t1 - t4 stimmen innerhalb der Figuren 5 - 7 überein):

Zum Zeitpunkt t1, das heißt zu Beginn des Schaltvorganges wird die Lamellenkupplung kurz beaufschlagt um den eingelegten Gang momentenfrei zu stellen, so daß die Schiebemuffe 21 durch Federkraft aus dem Losrad des Gangzahnradpaares 17 herausgleiten kann. Dieser Vorgang ist zum Zeitpunkt t2 abgeschlossen. Anschließend dreht der Motor hoch in Abhängigkeit von der Fahrpedalstellung und ggf. in Abhängigkeit von der Momentenbeeinflussungseinrichtung 28 und nach Ansteuerung durch die Steuereinrichtung 27. Zu diesem Zweck kann ein etwa vorhandenes Leerlauffüllungsregelungsventil mit aufgesteuert werden. Vor Erreichen der Synchrondrehzahl, das heißt, bevor die Drehzahldifferenz n_{DIFF} = 0 ist, wird wiederum die Lamellenkupplung 25 betätigt (Zeitpunkt t3). Das entsprechend übertragene Kupplungsmoment M_{LK} wird in der Figur 6 gezeigt. Die Reibung in der Lamellenkupplung 25 wirkt somit der Beschleunigung des Motors entgegen, wodurch eine Verringerung des Gradienten vom Zeitpunkt t3 an erzielt wird. Die Regelung mittels des Gradienten beginnt beim Zurückschalten ab dem Zeitpunkt t2 oder ab t3. Der vorzugebende Gradient ergibt sich beim Zurückschalten in ähnlicher Weise aus dem Kennfeld wie beim Hochschaltvorgang. Zur Optimierung des Schaltvorganges ist in einer weiteren Ausführungsform für den Rückschaltvorgang ein eigenes Kennfeld abgespeichert.

Zum Zeitpunkt t4 ist die Synchrondrehzahl erreicht und der neue Gang, zum Beispiel der erste Gang wird durch Betätigen der Schiebemuffe 21 eingelegt. Gleichzeitig wird die Lamellenkupplung 25 wieder gelöst. Das Antriebsmoment wird nunmehr voll über den neuen Gang übertragen.

Im Falle einer Rückschaltung aus dem fünften Gang wird zum Einleiten des Schaltvorganges lediglich die Lamellenkupplung 25 gelöst, um die volle Motorbeschleunigung zur Synchrondrehzahl der neuen niedrigeren Gangstufe zuzulassen. Der weitere Verlauf entspricht dem oben beschriebenen Vorgang. In ähnlicher Weise findet beim Hochschalten in den fünften Gang ein verkürzter Schaltvorgang statt. Nach der Aktivierung der Lamellenkupplung 25 wird lediglich der vierte Gang herausgenommen durch Betätigung der Schiebemuffe 20. Anschließend wird die Aktivierung der Lamellenkupplung 25 beibehalten bis Reibschluß eintritt und die zusätzliche Getriebestufe 23 als fünfter Gang geschaltet ist.

In einer weiteren Ausführungsform wird zusätzlich die Anfahrund Trennkupplung 13 am Schaltvorgang beteiligt. Diese wird nämlich durch die zweite Betätigungseinrichtung 30 so gesteuert, daß sie das auf ihrer Eingangsseite anliegende Moment nur bis zu einem gewissen Höchstwert überträgt. Die Lamellenkupplung 25 kann dann für geringere Belastungen ausgelegt werden und ist dadurch einfacher in der Bauweise. Weiterhin kann dies zu einer erheblichen Reduzierung des Steuerungsaufwandes führen, zumal die in der Regel ohnehin für Anfahrvorgänge vorhandene Betätigungseinrichtung 30 dann auch zur Anpassung des Kupplungsmomentes M_{LK} bzw. des Gradienten an den jeweiligen Schaltvorgang herangezogen werden kann. Ergänzend oder alternativ kann eine solche Anpassung auch abhängig vom anliegenden Motormoment erfolgen.

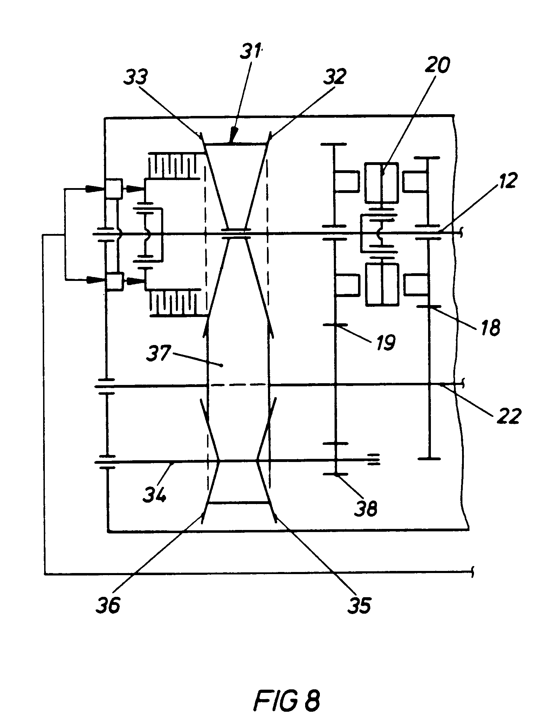

Figur 8 zeigt ausschnittsweise ein anderes Ausführungsbeispiel des Stufenwechselgetriebes. Es sind hier - abweichend von Figur 1 - die Losräder auf der Getriebeeingangswelle 12 und die Festräder auf der Getriebeausgangswelle 22 angeordnet. Die wesentliche Änderung zum Stufenwechselgetriebe nach Figur 1 besteht darin, daß die zuschaltbare Getriebestufe 31 (entspricht zuschaltbarer Getriebestufe 23 in Figur 1) nach Art eines Riemenantriebs mit kontinuierlich verstellbarer übersetzung ausgebildet ist. Zu diesem Zweck sind auf der Getriebeeingangswelle 12 zwei Riemenscheibenhälften 32, 33 als Losräder und auf einer Zwischenwelle 34 zwei Riemenscheibenhälften 35, 36 als Festräder angeordnet, die über einen Riemen 37 miteinander verbunden sind. Ein auf der Zwischenwelle 34 drehfest angeordnetes Ritzel 38 kämmt mit dem Abtriebsritzel des Gangzahnradpaares 19 (vierter Gang) und ermöglicht so die für den ordnungsgemäßen Antrieb der Getriebeausgangswelle 22 erforderliche Umkehr der Drehrichtung.

Durch eine an sich bekannte axiale Verstellung der Riemenscheibenhälften 32, 33 einerseits und 35, 36 andererseits ist das Übersetzungsverhältnis der zuschaltbaren Getriebestufe 31 stufenlos einstellbar. Analog zum Stufenwechselgetriebe in Figur 1 sind die hier als Losräder umlaufenden Riemenscheibenhälften 32, 33 über die Lamellenkupplung 25 mit der Getriebeeingangswelle 12 verbindbar. Durch die stufenlose Verstellbarkeit des Übersetzungsverhältnisses in der zuschaltbaren Getriebestufe 31 kann während eines beliebigen Hochschaltvorgangs der jeweilige Betrag des von der zuschaltbaren Getriebestufe allein zu übertragenden Antriebsmomentes an die Beträge der zum Zeitpunkt der Einleitung und Beendigung des Schaltvorganges von den Getrieberädern zu übertragenden Antriebsmomente angepaßt werden. So kann beispielsweise die Getriebestufe 31 beim Übergang vom ersten in den zweiten Gang auf das Übersetzungsverhältnis des zweiten Ganges angepaßt werden und zwar bereits vor dem Hochschaltvorgang. Das Einlegen des zweiten Ganges kann dann erfolgen, sobald Reibschluß im Bereich der Lamellenkupplung 25 vorliegt. Dabei wird zugleich die Wärmeleistung der Kupplung und damit auch ihr Verschleiß minimiert.

In einer weiteren, nicht gezeichneten Ausführungsform des Stufenwechselgetriebes analog zu Figur 1 sind die Riemenscheibenhälften 32, 33 auf der Getriebeeingangswelle 12 als Festräder angeordnet. Dabei sind die Riemenscheibenhälften 32, 33 derart auf der Getriebeeingangswelle 12 axial verstellbar, daß von dem Riemen 37 zumindest zeitweise kein Antriebsmoment übertragbar ist, und daß der Grad des Riemeneingriffs veränderbar ist. Die Funktion der Lamellenkupplung 25 wird somit durch das Zusammenwirken der Riemenscheibenhälften 32, 33 mit dem Riemen 37 ersetzt.

## Patentansprüche

1. Verfahren zum Schalten eines Stufenwechselgetriebes (11) für Fahrzeuge, das
- eine mit einem Antriebsmotor (15) verbindbare Getriebeeingangswelle (12),
- eine Getriebeausgangswelle (22),
- mehrere Getriebestufen (Paare von Gangzahnrädern 16 - 19),
- zumindest eine weitere zuschaltbare Getriebestufe (23), deren Übersetzungsverhältnis n_{EIN}/n_{AUS} kleiner ist als dasjenige der gerade eingelegten Getriebestufe, und die zwischen der Getriebeeingangswelle (12) und der Getriebeausgangswelle (22) angeordnet ist,
aufweist,
mit folgenden Verfahrensschritten:
a) zur Einleitung eines Schaltvorganges wird zunächst das an der Getriebeeingangswelle (12) anliegende Moment M_{EIN} zumindest teilweise über die zusätzliche Getriebestufe (23) zur Getriebeausgangswelle (22) geführt zur Entlastung der eingelegten Getriebestufe (6) und zur Änderung der Drehzahl n_{EIN} der Getriebeeingangswelle (12),
b) anschließend wird die zumindest teilweise entlastete eingelegte Getriebestufe (6) herausgenommen,
c) sodann wird die Drehzahl n_{EIN} der Getriebeeingangswelle (12) an eine Synchrondrehzahl für den nächsten einzulegenden Gang (7) angepaßt,
dadurch gekennzeichnet, daß
d) die Änderung und/oder Anpassung der Drehzahl n_{EIN} durch Vorgabe einer bestimmten Drehzahländerung pro Zeit (Sollwert eines Gradienten der Drehzahl) erfolgt, wobei der Betrag der Drehzahländerung pro Zeit in Abhängigkeit von zumindest einer den Betriebszustand des Antriebsmotors (15) charakterisierenden Größe vorgegeben wird.

2. Verfahren nach Anspruch 1, dadurch gekennzeichnet, daß die Änderung und Anpassung der Drehzahl n_{EIN} durch Rückführung und Regelung des Gradienten derselben erfolgt.

3. Verfahren nach Anspruch 1 oder 2, dadurch gekennzeichnet, daß der Gradient (Sollwert) in Abhängigkeit vom Motormoment M_{MOT} oder vom an der Getriebeeingangswelle (12) anliegenden Moment M_{EIN}, bestimmt wird.

4. Verfahren nach einem der Ansprüche 1 bis 3, dadurch gekennzeichnet, daß der Gradient (Sollwert) in Abhängigkeit von der neuen und/oder alten Gangstufe bestimmt wird.

5. Verfahren nach einem der Ansprüche 1 bis 4, dadurch gekennzeichnet, daß der Gradient (Sollwert) nahe der Synchrondrehzahl dem Betrage nach verringert wird, so daß für das Einlegen des nächsten Ganges ausreichend Zeit zur Verfügung steht.

6. Verfahren nach einem der Ansprüche 1 bis 5, dadurch gekennzeichnet, daß der Gradient (Sollwert) nach einer bestimmten Zeit der Veränderung der Drehzahl n_{EIN}, vor Erreichen der Synchrondrehzahl dem Betrage nach verringert wird.

7. Verfahren nach einem der Ansprüche 1 bis 5, dadurch gekennzeichnet, daß der Gradient (Sollwert) in Abhängigkeit von der Nähe der erreichten Drehzahl n_{EIN-IST} zur Synchrondrehzahl und vor Erreichen derselben verringert wird.

8. Verfahren nach einem der Ansprüche 1 bis 5, dadurch gekennzeichnet, daß der Gradient (Sollwert) in Abhängigkeit vom Betrag der Differenz der Drehzahlen der Getriebeeingangswelle (Drehzahl zu Beginn der Drehzahländerung n_{EIN-Start} - momentane Drehzahl n_{EIN-IST}) verringert wird.

9. Verfahren nach einem der Ansprüche 1 bis 8, dadurch gekennzeichnet, daß das an der Getriebeeingangswelle (12) anliegende Moment M_{EIN} aus dem gemessenen Saugrohrdruck des Motors und/oder dem gemessenen Drehzahlgradienten des Motors und/oder dem Trägheitsmoment vorgeordneter drehender Teile, insbesondere einer Schwungscheibe (14) ermittelt wird.

10. Verfahren nach einem der Ansprüche 1 bis 9, dadurch gekennzeichnet, daß die zusätzliche Getriebestufe (23; 31) über eine im Schlupfzustand betreibbare zusätzliche Kupplung (25) mit einer der Getriebewellen, insbesondere mit der Getriebeeingangswelle (12) verbunden wird, wobei der Schlupfzustand bzw. die Momentenübertragung durch Änderung einer Schließkraft der Kupplung (25) gesteuert bzw. geregelt wird.

11. Verfahren nach Anspruch 10, dadurch gekennzeichnet, daß die Änderung der Drehzahl zur Anpassung an die Synchrondrehzahl durch Änderung der Schließkraft an der zusätzlichen Kupplung (25) gesteuert bzw. geregelt wird, insbesondere beim Hochschalten.

12. Verfahren nach einem der Ansprüche 1 bis 11, dadurch gekennzeichnet, daß die Änderung der Drehzahl zur Anpassung an die Synchrondrehzahl durch Ansteuerung des Motors (15) erfolgt, vorzugsweise beim Zurückschalten.

13. Verfahren nach einem der Ansprüche 10 bis 12, dadurch gekennzeichnet, daß die Änderung der Drehzahl zur Anpassung an die Synchrondrehzahl beim Zurückschalten zunächst durch Ansteuerung des Motors (15) und kurz vor Erreichen der Synchrondrehzahl durch gegebenenfalls zusätzliches Schließen der zusätzlichen Kupplung (25) erfolgt.

14. Stufenwechselgetriebe mit einer Steuereinrichtung (27) zur Durchführung des Verfahrens nach einem der Ansprüche 1 bis 13, dadurch gekennzeichnet, daβ die Steuereinrichtung (27) ein Programm zur Steuerung bzw. Regelung der Verfahrensschritte a) bis d) gemäβ Anspruch 1 aufweist und die Drehzahländerung der Getriebeeingangswelle (12) durch Ansteuerung des Motors (15) und/oder durch zumindest teilweise Zuschaltung der zusätzlichen Getriebestufe (23;31) steuert bzw. regelt.

15. Stufenwechselgetriebe nach Anspruch 14, dadurch gekennzeichnet, daß die zuschaltbare Getriebestufe (31) stufenlos oder schrittweise verstellbar ist.

## Claims

1. A process for switching a stepped change gearbox (11) for motor vehicles which comprises
- a gear input shaft (12) which can be connected to a driving motor (15),
- a gear output shaft (22),
- a plurality of gear steps (pairs of toothed gear wheels 16-19),
- at least one further connectable gear step (23), the transmission ratio n_{IN}/n_{OUT} of which is smaller than that of the gear step just engaged and which step is disposed between the gear input shaft (12) and the gear output shaft (22), having the following process steps:
a) in order to initiate a switching process the torque M_{IN} lying at the gear input shaft (12) is first guided at least partially over the additional gear step (23) to the gear output shaft (22) in order to relieve the engaged gear step (6) and to change the rotational speed n_{IN} of the gear input shaft (12),
b) subsequently the engaged gear step (6) which is at least partially relieved is deselected,
c) the rotational speed n_{IN} of the gear input shaft (12) is then adapted to a synchronous rotational speed for the next gear (7) to be engaged,
characterised in that,
d) the change and/or adaptation of the rotational speed n_{IN} is achieved by the setting of a predetermined change in rotational speed with respect to time (desired value of a rotational speed slope), wherein the value of change in the rotational speed with respect to time is preset in dependence upon at least one variable characterising the operating state of the driving motor (15).

2. A process according to claim 1, characterised in that the change and adaptation of the rotational speed n_{IN} is achieved by return and regulation of the slope thereof.

3. A process according to claim 1 or 2, characterised in that the slope (desired value) is predetermined in dependence upon engine torque M_{MOT} or upon the torque M_{IN} lying at the gear input shaft (12).

4. A process according to one of claims 1 to 3, characterised in that the slope (desired value) is predetermined in dependence upon the new and/or old gear step.

5. A process according to one of claims 1 to 4, characterised in that the slope (desired value) is reduced near the synchronous rotational speed according to the value so that there is sufficient time for the next gear to be engaged.

6. A process according to one of claims 1 to 5, characterised in that the slope (desired value) is reduced after a predetermined time according to the value of the change of the rotational speed n_{IN} prior to the synchronous rotational speed being achieved.

7. A process according to one of claims 1 to 5, characterised in that the slope (desired value) is reduced in dependence upon the nearness of the achieved rotational speed n_{IN-ACTUAL} to the synchronous rotational speed and prior to this being achieved.

8. A process according to one of claims 1 to 5, characterised in that the slope (desired value) is reduced in dependence upon the value of the difference between the rotational speeds of the gear input shaft (rotational speed at the beginning of the change in rotational speed n_{IN-Start} - momentary rotational speed n_{IN-ACTUAL}).

9. A process according to one of claims 1 to 8, characterised in that the torque M_{IN} lying at the gear input shaft (12) is determined from the measured inlet pipe pressure of the engine and/or the measured rotational speed slope of the engine and/or rotating parts disposed in advance of the moment of inertia, in particular in advance of a flywheel (14).

10. A process according one of claims 1 to 9, characterised in that the additional gear step (23; 31) is connected, by means of an additional coupling (25), which can be operated in the slip condition, to one of the gear shafts, in particular to the gear input shaft (12), wherein the slip condition and/or the torque transfer is controlled and/or regulated by means of changing a locking force of the coupling (25).

11. A process according to claim 10, characterised in that the change in the rotational speed for adaptation to the synchronous rotational speed is controlled and/or regulated by changing the locking force at the additional coupling (25), in particular while switching up gear.

12. A process according to one of the claims 1 to 11, characterised in that changing the rotational speed to adapt to the synchronous rotational speed is achieved by means of controlling the motor (15), preferably while switching down gear.

13. A process according to one of claims 10 to 12, characterised in that changing the rotational speed to adapt to the synchronous rotational speed during switching down gear is achieved first by controlling the motor (15) and shortly prior to the synchronous rotational speed being achieved by means of the if necessary additional locking of the additional coupling (25).

14. A stepped change gearbox having a control device (27) to carry out the process according to one of the claims 1 to 13, characterised in that the control device (27) comprises a program for controlling and/or regulating the process steps a) to d) according to claim 1 and the change in the rotational speed of the gear input shaft (12) is controlled and/or regulated by means of controlling the motor (15) and/or by means of an at least partial connection of the additional gear step (23; 31).

15. A stepped change gearbox according to claim 14, characterised in that the connectable gear step (31) can be adjusted continuously or step-by-step.

## Revendications

1. Procédé pour passer les vitesses dans une boîte à vitesses (11) pour véhicules, qui comprend
- un arbre d'entrée (12) de la boîte qui peut être relié à un moteur de commande (15),
- un arbre de sortie (22) de la boîte,
- plusieurs vitesses (paires de pignons d'enclenchement de vitesse 16-19),
- au moins une autre vitesse (23) pouvant être passée, dont le rapport de transmission n_{entrée}/nₛₒᵣₜᵢₑ est plus faible que celui de la vitesse momentanément enclenchée et qui est disposée entre l'arbre d'entrée (12) et l'arbre de sortie (22) de la boîte,
comprenant les phases suivantes :
a) pour engager un changement de vitesse, le couple M_{entrée} s'exerçant sur l'arbre d'entrée (12) de la boîte est tout d'abord transféré à l'arbre de sortie (22) de la boîte au moins partiellement par l'intermédiaire de la vitesse supplémentaire (23) afin de soulager la vitesse enclenchée (6) et de faire varier la vitesse de rotation n_{entrée} de l'arbre d'entrée (12) de la boîte,
b) ensuite, la vitesse enclenchée (6), au moins partiellement soulagée, est extraite,
c) puis la vitesse de rotation n_{entrée} de l'arbre d'entrée (12) de la boîte est adaptée à une vitesse de synchronisation de la vitesse suivante (7) devant être enclenchée,
caractérisé en ce que
d) la variation et/ou l'adaptation de la vitesse de rotation n_{entrée} s'effectue par prescription d'une variation déterminée de vitesse de rotation par unité de temps (valeur de consigne d'un gradient de la vitesse de rotation), l'importance de la variation de la vitesse de rotation par unité de temps étant prescrite en fonction d'au moins une grandeur caractérisant le régime du moteur de commande (15).

2. Procédé selon la revendication 1, caractérisé en ce que la variation et l'adaptation de la vitesse de rotation n_{entrée} s'effectue par rétroaction et réglage du gradient de celle-ci.

3. Procédé selon la revendication 1 ou 2, caractérisé en ce que le gradient (la consigne) est déterminé en fonction du couple du moteur Mₘₒₜ ou du couple M_{entrée} s'exerçant sur l'arbre d'entrée (12) de la boîte.

4. Procédé selon l'une des revendications 1 à 3, caractérisé en ce que le gradient (la consigne) est déterminé en fonction du nouveau et/ou de l'ancien étage de vitesse.

5. Procédé selon l'une des revendications 1 à 4, caractérisé en ce que la valeur du gradient (de la consigne) subit une diminution de manière que la vitesse se rapproche de celle de synchronisation de façon qu'un temps suffisant soit disponible pour l'enclenchement de la vitesse suivante.

6. Procédé selon l'une des revendications 1 à 5, caractérisé en ce que la valeur du gradient (de la consigne) subit une diminution à la fin d'un temps déterminé de la variation de la vitesse de rotation n_{entrée} avant que la vitesse de synchronisation soit atteinte.

7. Procédé selon l'une des revendications 1 à 5, caractérisé en ce que le gradient (la consigne) subit une diminution en fonction de l'arrivée de la vitesse de rotation atteinte n_{entrée-réelle} à proximité de la vitesse de synchronisation et avant que celle-ci soit atteinte.

8. Procédé selon l'une des revendications 1 à 5, caractérisé en ce que le gradient (la valeur de consigne) subit une diminution en fonction de la valeur de la différence des vitesses de rotation de l'arbre d'entrée de la boîte (de la vitesse de rotation au début de la variation de vitesse n_{entrée-début} -vitesse de rotation momentanée n_{entrée-réelle}).

9. Procédé selon l'une des revendications 1 à 8, caractérisé en ce que le couple M_{entrée} s'exerçant sur l'arbre d'entrée (12) de la boîte se détermine à partir de la pression mesurée dans la pipe d'aspiration du moteur et/ou du gradient mesuré de la vitesse de rotation du moteur et/ou du moment d'inertie de pièces rotatives placées en amont, en particulier d'un volant (14).

10. Procédé selon l'une des revendications 7 à 9, caractérisé en ce que la vitesse supplémentaire (23 ; 31) est reliée à l'un des arbres de la boîte, en particulier à son arbre d'entrée (12), par un embrayage supplémentaire (25) pouvant fonctionner avec patinage, le patinage ou la transmission du couple étant commandé ou réglé par variation de la force de fermeture de l'embrayage (25).

11. Procédé selon la revendication 10, caractérisé en ce que la variation de la vitesse de rotation pour l'adaptation à la vitesse de synchronisation est commandée ou réglée par modification de la force de fermeture de l'embrayage auxiliaire (25), en particulier au passage à une vitesse supérieure.

12. Procédé selon l'une des revendications 1 à 11, caractérisé en ce que la variation de la vitesse de rotation pour l'adaptation à la vitesse de synchronisation s'effectue par pilotage du moteur (15), de préférence au passage à une vitesse inférieure.

13. Procédé selon l'une des revendication 10 à 12, caractérisé en ce que la variation de la vitesse de rotation pour l'adaptation à la vitesse de synchronisation s'effectue au passage à une vitesse inférieure tout d'abord par pilotage du moteur (15) et, peu avant que la vitesse de synchronisation soit atteinte, par fermeture éventuellement complémentaire de l'embrayage supplémentaire (25).

14. Boîte à vitesses équipée d'un dispositif de commande (27) pour la mise en oeuvre du procédé selon l'une des revendications 1 à 13, caractérisée en ce que le dispositif de commande (27) comprend un programme de commande et de réglage des phases a) à d) du procédé selon la revendication 1 et commande et règle, respectivement, la variation de la vitesse de rotation de l'arbre d'entrée (12) de la boîte par pilotage du moteur (15) et/ou par enclenchement au moins partiel de la vitesse supplémentaire (23 ; 31).

15. Boîte à vitesses selon la revendication 14, caractérisée en ce que la vitesse pouvant être passée (31) est réglable en continu ou par paliers.
